# EUROPEAN PATENT SPECIFICATION

(11) **EP 0 393 030 B1**
(45) Date of publication and mention of the grant of the patent: **10.11.1993**
(21) Application number: 88904249.5
(22) Date of filing: 13.05.1988
(51) Int. Cl.: C10B 53/00

(54) **DESTRUCTION OF PLASTICS WASTE**
VERNICHTUNG VON KUNSTSTOFFABFÄLLEN
DESTRUCTION DE DECHETS PLASTIQUES

(30) Priority: 13.05.1987 GB 8711257; 11.11.1987 GB 8726396
(43) Date of publication of application: 24.10.1990
(73) Proprietor: HOLLAND, Kenneth Michael, Romford, Essex (GB)
(72) Inventor: HOLLAND, Kenneth Michael, Romford, Essex (GB)
(74) Representative: Wain, Christopher Paul
(86) International application number: PCT/GB88/00378
(87) International publication number: WO 88/08871

(56) References cited:
- DE-A- 2 328 545
- DE-A- 2 420 640
- US-A- 3 843 457
- US-A- 4 171 345
- US-A- 4 402 791

## Description

The present invention is concerned with the destruction of plastics waste.

The destruction of plastics waste is a substantial problem, because of the increasing amount of plastics materials being used in, for example, automobile bodies and packaging. Such plastics waste is generally disposed of either by incineration or by use as landfill; the former method is objectionable on environmental grounds because of the nature of some of the combustion gases produced, while the latter method is inefficient because of the large bulk of plastics material.

U.S. 3843457 discloses the pyrolysis by microwave discharge of a single mixed organic waste which may contain, amongst its many ingredients, plastics waste. The pyrolysis is such as to avoid charring of the waste materials and to produce reactive fragments which can react with the gas stream to produce useful organic compounds.

I have now developed a method wherein plastics waste can be pyrolysed using elemental carbon to transfer thermal energy to the plastics.

According to the present invention therefore there is provided a method of pyrolysis of plastics waste which is not itself susceptible to heating by microwave radiation, which comprises the steps of:
(a) providing in retaining means inert to microwave radiation, a bed consisting essentially of pulverulent elemental carbon material, said bed being under an atmosphere wherein flame generation is substantially prevented;
(b) providing a source consisting essentially of said plastics waste;
(c) feeding said plastics waste from said source to said bed of pulverulent elemental carbon material while said material is present in said retaining means; and
(d) subjecting said pulverulent elemental carbon material to microwave irradiation such that said material is heated to at least 400°C and thermal energy is transferred from said material to said plastics waste so as to cause substantial pyrolysis of said plastics waste.

It is preferred that the pulverulent element carbon material comprises carbon-filled vulcanised rubber, such as a waste tyre compound in chopped or finely divided form. Waste tyre compounds generally contain rubber, carbon filler and reinforcement or organic textile and/or metal wire. When an organic textile reinforcement is employed, the latter is generally substantially carbonised by microwave irradiation; when metal wire reinforcement is employed, the latter would be substantially unaffected by the microwave discharge and can therefore be collected together with solid pyrolysis products.

As mentioned above, the microwave radiation is employed at such a power and for sufficient time that the pulverulent elemental carbon material is heated to at least 400°C. Since the method according to the invention is carried out in a substantially oxygen-free atmosphere, there would in general only be a danger of production of dioxin or other noxious products with certain feedstocks; in such cases it is preferred to ensure that the pulverulent elemental carbon material (and therefore the plastics waste) attains a temperature of at least 800°C, which is sufficiently high that the risk of evolution of dioxins or similar noxious products by the pyrolysed plastics material is minimised or eliminated.

If the plastics waste being destroyed (pyrolysed) in the method according to the invention is relatively easily degraded (e.g. polyethylene or nylon), then temperatures from 400 to 800°C may be satisfactory. When more thermally resistant plastics and halogenated plastics (such as PTFE or PVC) are employed, the temperature of the pulverulent elemental carbon material may be at least 800°C.

Especially when the pulverulent elemental carbon material is employed in the form of a fluidised bed, the method according to the invention can be operated as a continuous process. It is preferred that the pulverulent elemental carbon material should be fluidised at least partially by means of hot recycled gaseous by-products (such as hydrogen and/or methane) from the microwave irradiation zone. The pulverulent elemental carbon material is preferably supplied continuously, and allowed to overflow from the fluidised bed.

In the case where a static bed of the the pulverulent elemental carbon material is employed, it is preferred that the material should be present in an open-topped receptacle of a material which is reflective to microwaves (such as stainless steel), which may be refractory-lined if higher temperature operation (i.e. above about 600°C) is envisaged. When such a static bed is employed, solid products resulting from the microwave irradiation step are preferably mechanically removed. The plastics waste may be supplied to the static bed either continuously, semi-continuously or intermittently (in a batch process, for example). The plastics is preferably supplied in such a manner that the carbon material is allowed to overflow from the static bed, the pulverulent elemental carbon material being at least partly recycled to the bed.

The plastics waste to be destroyed in the method according to the invention may be any of the conventional plastics materials, which may be thermoplastic or thermoset. Typical such materials include polyolefins (e.g. polyethylene, polypropylene or the like), polyamides, polyesters (e.g. polyethylene terephthalate), polyurethanes and halogenated polymers (e.g. PVC).

It is preferred that the plastics should be substantially free of halogen and nitrogen, in order to avoid production of noxious gases; it is particularly preferred that the plastics consist substantially wholly of carbon and hydrogen and, optionally, oxygen.

The plastics waste may be in finely divided form, or bulk form, provided it can be contacted with the pulverulent elemental carbon material by, for example, partial immersion or, in some embodiments, total immersion.

The wavelength of the microwave radiation employed is such that it causes substantial heating of the pulverulent material. It is typically in the low gigahertz frequency range (e.g. about 2.4 gigahertz), although higher wavelengths can be employed if wished.

It is particularly preferred to ensure that the by-product gases from the microwave irradiation zone are rendered non-pollutant before being vented to the atmosphere; this can be achieved by scrubbers or similar means. The by-product gases are typically recovered for use as preheating medium, fuel or the like. The nature of such gases depends of the chemical nature of the feedstock, as well as the temperature achieved in the microwave irradiation process. The solids resulting from the microwave irradiation step may be recycled for use as the pulverulent elemental carbon material in a further microwave irradiation step; alternatively, they may be used as a fuel.

Reference will now be made to the accompanying drawings, in which:
Figure 1 is a block diagram illustrating a typical sequence of operations in an exemplary embodiment of a method according to the invention; and
Figure 2 is a schematic illustration of the operation of an exemplary embodiment of a method according to the invention.

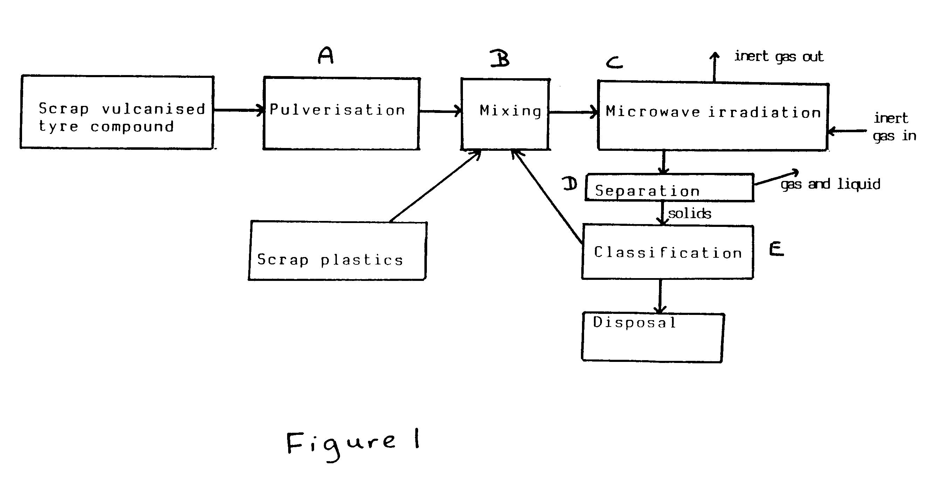

Referring to Figure 1, scrap vulcanised tyre compound is passed to pulverisation zone A where it is reduced to suitably sized particles. The resulting pulverulent material is then passed to mixing zone B, where it is mixed with scrap plastics (such that the plastics is at least partially submerged in the pulverulent material).

The mixed pulverulent material and plastics are then passed to microwave irradiation zone C, which is continuously flushed with an inert gas (such as nitrogen or inert by-product gas from the microwave irradiation zone) via purged sequenced air-locks (not shown). In the microwave irradiation zone C, chopped or finely divided scrap tyre material is rapidly raised to red heat, which heat is transferred to the plastics to cause pyrolysis of the latter.

Gases and liquids produced are then separated in zone D; the solids are then passed to a classification zone E, from which suitably sized solids are recycled to mixing zone B (or alternatively direct to irradiation zone C), while still hot, so as to preheat the plastics waste.

The process as described with reference to Figure 1 is particularly suitable for operation in a continuous manner; the recycling of at least part of the pulverulent material to the microwave irradiation zone is particularly preferred because of the economy of energy input which can be achieved, because the plastics is partly heated to pyrolysis temperature by the recycled material.

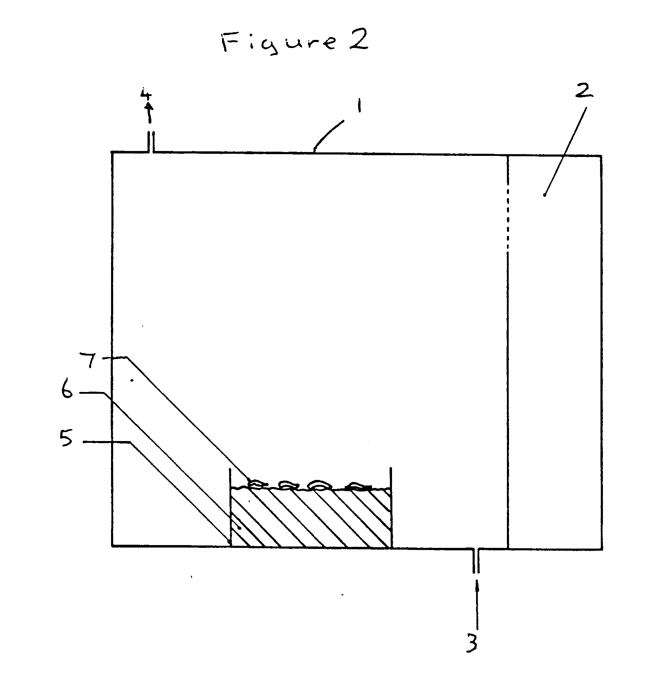

Referring to Figure 2, there is shown a microwave oven 1 incorporating a microwave generator 2, an inlet 3 for inert gas (such as nitrogen) and an outlet 4 for the inert gas and evolved gases.

Disposed within the oven is a bowl or other suitable receptacle 5 (of stainless steel, ceramic or the like) partially filled with pulverulent elemental carbon medium 6; plastics waste 7 is partially immersed in the latter.

In an example, a one kilowatt industrial microwave oven was employed, and the bowl disposed in the oven charged with approximately one kilogram of pulverulent elemental carbon medium and a similar quantity of plastics waste. The oven was then supplied with an oxygen-free atmosphere and then actuated for irradiation for a period of three minutes, during which period, the carbon material became red hot (about 800°C).

Gases evolved were removed by an extractor fan and passed to a cleaning/scrubbing apparatus (not shown); the powder remaining in the bowl was then ready for charging with fresh quantities of plastics waste.

## Claims

1. A method of pyrolysis of plastics waste which is not itself susceptible to heating by microwave radiation, which comprises the steps of:
(a) providing in retaining means which is inert to microwave radiation, a bed consisting essentially of pulverulent elemental carbon material, said bed being under an atmosphere wherein flame generation is substantially prevented;
(b) providing a source consisting essentially of said plastics waste;
(c) feeding said plastics waste from said source to said bed of pulverulent elemental carbon material while said material is present in said retaining means; and
(d) subjecting said pulverulent elemental carbon material to microwave irradiation such that said material is heated to at least 400°C and thermal energy is transferred from said material to said plastics waste so as to cause substantial pyrolysis of said plastics waste.

2. A method according to claim 1, in which at least part of said pulverulent elemental carbon material passes out of the microwave irradiation zone and is recycled thereto.

3. A method according to claim 1 or 2, in which said retaining means produces a fluidised bed of said pulverulent elemental carbon material.

4. A method according to claim 3, in which said pulverulent elemental carbon material is fluidised by means of a gaseous medium comprising hot gaseous by-products of the microwave irradiation zone.

5. A method according to claim 3 or 4, in which said pulverulent elemental carbon material and/or said plastics waste is supplied continuously to said fluidised bed.

6. A method according to claim 1 or 2, in which said retaining means comprises an open-topped receptacle.

7. A method according to claim 6, in which said receptacle comprises stainless steel.

8. A method according to any of claims 1 to 7, in which said pulverulent elemental carbon material comprises scrap carbon-filled vulcanised rubber.

9. A method according to any of claims 1 to 8, in which said plastics waste is substantially free of halogen-containing and/or nitrogen-containing plastics materials.

## Patentansprüche

1. Verfahren zur Pyrolyse von Kunststoffabfall, welcher der Erwärmung durch Mikrowellenstrahlung nicht selbst zugänglich ist, das die folgenden Schritte umfaßt:
(a) Bereitstellen eines im wesentlichen aus pulverförmigem, elementarem Kohlenstoffmaterial bestehenden Bettes in einer gegenüber Mikrowellenbestrahlung inerten Kaltevorrichtung, wobei das Bett einer Atmosphäre ausgesetzt ist, in der Flammenbildung im wesentlichen verhindert wird;
(b) Bereitstellen einer im wesentlichen aus dem Kunststoffabfall bestehenden Quelle;
(c) Zuführen des Kunststoffabfalls aus der Quelle zu dem Bett aus pulverförmigem, elementarem Kohlenstoffmaterial, während sich das Material in der Haltevorrichtung befindet; und
(d) Bestrahlen des pulverförmigen, elementaren Kohlenstoffmaterials mit Mikrowellen derart, daß das Material auf mindestens 400°C erwärmt und thermische Energie von dem Material zu dem Kunststoffabfall übertragen wird, um eine wesentliche Pyrolyse des Kunststoffabfalls zu bewirken.

2. Verfahren nach Anspruch 1, bei welchem wenigstens ein Teil des pulverförmigen, elementaren Kohlenstoffmaterials aus der Mikrowellenbestrahlungszone austritt und in diese zurückgeführt wird.

3. Verfahren nach Anspruch 1 oder 2, bei welchem die Haltevorrichtung ein Fließbett aus dem pulverförmigen, elementaren Kohlenstoffmaterial bildet.

4. Verfahren nach Anspruch 3, bei welchem das pulverförmige, elementare Kohlenstoffmaterial mittels eines gasförmigen Mediums, welches heiße, gasförmige Nebenprodukte der Mikrowellenbestrahlungszone enthält, fluidisiert wird.

5. Verfahren nach Anspruch 3 oder 4, bei welchem das pulverförmige, elementare Kohlenstoffmaterial und/oder der Kunststoffabfall dem Fließbett kontinuierlich zugeführt wird.

6. Verfahren nach Anspruch 1 oder 2, bei welchem die Haltevorrichtung einen oben offenen Behälter aufweist.

7. Verfahren nach Anspruch 6, bei welchem der Behälter rostfreien Stahl enthält.

8. Verfahren nach einem der Ansprüche 1 bis 7, bei welchem das pulverförmige, elementare Kohlenstoffmaterial kohlenstoffgefüllten, vulkanisierten Altgummi enthält.

9. Verfahren nach einem der Ansprüche 1 bis 8, bei welchem der Kunststoffabfall im wesentlichen frei von halogenhaltigen und/oder stickstoffhaltigen Kunststoffmaterialien ist.

## Revendications

1. Procédé de pyrolyse de déchets plastiques qui ne sont pas eux-mêmes susceptibles d'être chauffés par micro-ondes, ledit procédé comprenant les étapes consistant à :
(a) prévoir dans des moyens de rétention inertes aux micro-ondes, un lit constitué essentiellement d'un matériau en carbone élémentaire pulvérulent, ledit lit étant à une pression à laquelle la génération de flamme est essentiellement impossible ;
(b) prévoir une source constituée essentiellement de déchets plastiques ;
(c) alimenter lesdits déchets plastiques de ladite source vers ledit lit de carbone élémentaire pulvérulent alors que ledit matériau pulvérulent est présent dans lesdits moyens de rétention ; et à
(d) soumettre ledit carbone élémentaire pulvérulent à une irradiation aux microondes de façon telle que le matériau soit chauffé à au moins 400°C et que de l'énergie thermique soit transférée dudit matériau audit déchet plastique de façon à provoquer la pyrolyse substantielle desdits déchets plastiques.

2. Procédé selon la revendication 1, dans lequel au moins une partie dudit matériau en carbone élémentaire pulvérulent sort de la zone d'irradiation micro-ondes et est recyclée.

3. Procédé selon la revendication 1 ou 2, dans lequel lesdits moyens de rétention produisent un lit fluidisé dudit matériau en carbone élémentaire pulvérulent.

4. Procédé selon la revendication 3, dans lequel ledit matériau en carbone élémentaire pulvérulent est fluidisé par des moyens gazeux comprenant les sous-produits gazeux chauds provenant de la zone d'irradiation par micro-ondes.

5. Procédé selon la revendication 3 ou 4, dans lequel ledit matériau en carbone élémentaire pulvérulent et/ou lesdits déchets plastiques sont alimentés en continu vers ledit lit fluidisé.

6. Procédé selon la revendication 1 ou 2, dans lequel lesdits moyens de rétention comprennent un réceptacle ouvert à son extrémité supérieure.

7. Procédé selon la revendication 6, dans lequel ledit réceptacle comprend de l'acier inoxydable.

8. Procédé selon l'une des revendications 1 à 7, dans lequel ledit matériau en carbone élémentaire pulvérulent comprend un caoutchouc vulcanisé chargé avec de petits morceaux de carbone.

9. Procédé selon l'une des revendications 1 à 8, dans lequel lesdits déchets plastiques ne contiennent essentiellement pas de produit contenant des halogènes ou contenant de l'azote.
